# FASCICULE DE BREVET EUROPEEN

(11) **EP 3 553 331 B1**
(45) Date de publication et mention de la délivrance du brevet: **19.08.2020**
(21) Numéro de dépôt: 19163514.3
(22) Date de dépôt: 18.03.2019
(51) Int. Cl.: F16C 11/04, B64D 29/08, E05D 5/12, B64D 29/06

(54) **DISPOSITIF DE LIAISON PIVOTANTE ENTRE AU MOINS DEUX PIECES, AERONEF COMPRENANT UN CAPOT EQUIPE DUDIT DISPOSITIF DE LIAISON PIVOTANTE**
VERBINDUNGSVORRICHTUNG, DIE ZWISCHEN MINDESTENS ZWEI TEILEN SCHWENKBAR IST, LUFTFAHRZEUG, DAS EINE ABDECKUNG UMFASST, DIE MIT DIESER SCHWENKBAREN VERBINDUNGSVORRICHTUNG AUSGESTATTET IST
DEVICE FOR PIVOTING CONNECTION BETWEEN AT LEAST TWO PARTS, AIRCRAFT COMPRISING A COWL EQUIPPED WITH SAID PIVOTING CONNECTION DEVICE

(30) Priorité: 10.04.2018 FR 1853088
(43) Date de publication de la demande: 16.10.2019
(73) Titulaire: AIRBUS OPERATIONS (S.A.S.), 31060 Toulouse (FR)
(72) Inventeur: MESSINA, Paolo, 31100 TOULOUSE (FR)
(74) Mandataire: Gicquel, Olivier Yves Gérard

(56) Documents cités:
- FR-A1- 2 721 365
- FR-A1- 3 014 972
- FR-A5- 2 118 756
- US-A1- 2007 289 096

## Description

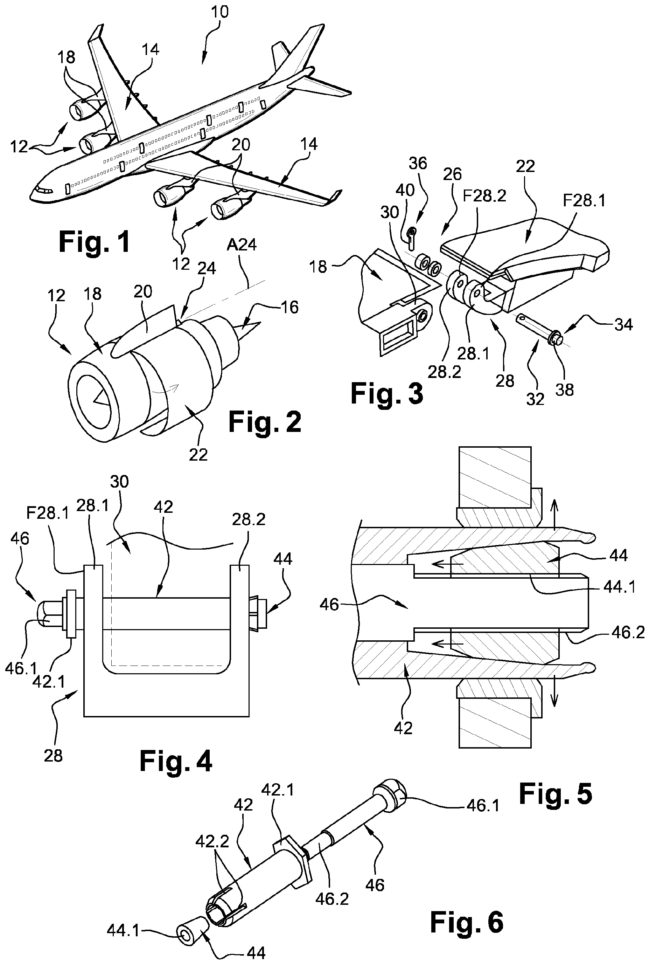

La présente demande se rapporte à un dispositif de liaison pivotante entre au moins deux pièces ainsi qu'à un aéronef comprenant un capot équipé dudit dispositif de liaison pivotante. Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle 18 positionnée autour du moteur 16 et un mât 20 qui assure la liaison entre le moteur 16 et le reste de l'aéronef 10, notamment la voilure 14.

La nacelle 18 comprend au moins un capot 22 relié au reste de la nacelle 18 par une charnière 24 permettant au capot 22 de pivoter autour d'un axe de pivotement A24 entre une position ouverte (visible sur la figure 2) et une position fermée (visible sur la figure 1).

Selon une configuration, la charnière 24 présente plusieurs dispositifs de liaison pivotante 26 répartis le long de l'axe de pivotement A24.

Selon un premier mode de réalisation visible sur la figure 3, un dispositif de liaison pivotante 26 comprend :
- une chape 28, solidaire du capot 22 (ou respectivement du reste de la nacelle 18), présentant deux branches 28.1, 28.2,
- un bras 30, solidaire du reste de la nacelle 18 (ou respectivement du capot 22), positionné entre les branches 28.1, 28.2 de la chape 28,
- un axe cylindrique 32 positionné dans des alésages coaxiaux prévus dans les deux branches 28.1, 28.2 de la chape 28 et le bras 30, ledit axe cylindrique 32 assurant la liaison entre la chape 28 et le bras 30 et présentant un axe de révolution confondu avec l'axe de pivotement A24.

Des bagues de guidage peuvent être intercalées entre l'axe cylindrique 32 et les branches 28.1, 28.2 de la chape 28 ainsi qu'entre l'axe cylindrique 32 et le bras 30.

Le dispositif de liaison pivotante 26 comprend également des première et deuxième butées 34, 36, positionnées de part et d'autre des branches 28.1, 28.2 de la chape 28, pour immobiliser en translation l'axe cylindrique 32 par rapport aux branches 28.1, 28.2 selon une direction parallèle à l'axe de pivotement A24.

Selon ce premier mode de réalisation, l'axe cylindrique 32 présente à une première extrémité une tête 38 qui forme la première butée 34 et qui est configurée pour prendre appui contre la face extérieure F28.1 de la première branche 28.1 de la chape 28.

La deuxième butée 36 se présente sous la forme d'une goupille fendue 40 qui traverse l'axe cylindrique 32 et qui est configurée pour prendre appui contre la face extérieure F28.2 de la deuxième branche 28.2 de la chape 28.

Ce premier mode de réalisation nécessite que les deux côtés de la chape 28 soient accessibles pour pouvoir assembler le dispositif de liaison pivotante, l'axe cylindrique 32 étant introduit depuis un premier côté de la chape 28, la goupille fendue étant mise en place depuis un deuxième côté de la chape 28.

Selon un deuxième mode de réalisation décrit par le document FR-2.947.592 et illustré par les figures 4 à 6, un dispositif de liaison pivotante comprend, en plus de la chape 28 et du bras 30, un système de liaison comportant :
- un corps tubulaire 42 qui présente, à une première extrémité une collerette 42.1 configurée pour prendre appui contre la face extérieure F28.1 de la première branche 28.1 de la chape 28 et, à une deuxième extrémité, au moins une fente 42.2 permettant à la deuxième extrémité du corps tubulaire 42 de s'expanser radialement,
- un insert 44 de forme tronconique positionné à l'intérieur du corps tubulaire 42, au niveau de sa deuxième extrémité, présentant un alésage taraudé 44.1, et
- une vis 46, configurée pour se loger dans le corps tubulaire 42 présentant, à une première extrémité, une tête 46.1 configurée pour être plaquée contre la collerette 42.1 du corps tubulaire 42 et, à une deuxième extrémité, un tronçon fileté 46.2 configuré pour se visser dans l'alésage taraudé 44.1.

Le vissage ou le dévissage de la vis 46 provoque le rapprochement ou l'écartement de l'insert 44 et de la tête 46.1 de la vis 46. Lorsque l'insert 44 et la tête 46.1 de la vis 46 sont à l'état écarté, la deuxième extrémité du corps tubulaire 42 n'est pas expansée radialement. Lorsque l'insert 44 et la tête 46.1 de la vis 46 sont à l'état rapproché, la deuxième extrémité du corps tubulaire 42 est expansée radialement.

Selon ce deuxième mode de réalisation, l'insert 44 et la tête 46.1 de la vis 46 étant à l'état écarté, le système de liaison est inséré dans les alésages des branches 28.1, 28.2 de la chape 28 et du bras 30 depuis un premier côté de la chape 28. Lorsque le système de liaison est inséré, la tête 46.1 de la vis 46 et l'insert 44 sont rapprochés en vissant la vis 46, depuis le premier côté de la chape 28, de manière à provoquer l'expansion de la deuxième extrémité du corps tubulaire 42.

Ainsi, selon ce deuxième mode de réalisation, la collerette 42.1 du corps tubulaire 42 forme une première butée permettant d'immobiliser le corps tubulaire 42 selon un premier sens. L'expansion de la deuxième extrémité du corps tubulaire forme une deuxième butée permettant d'immobiliser le corps tubulaire 42 selon un deuxième sens, opposé au premier sens. Les frottements entre le corps tubulaire 42 et la deuxième branche 28.2 de la chape 28, en raison de l'expansion radiale de la deuxième extrémité du corps tubulaire, contribuent également à l'immobilisation du corps tubulaire 42 par rapport à la deuxième branche 28.2.

Ce deuxième mode de réalisation permet l'assemblage du dispositif de liaison pivotante depuis un seul côté de la chape 28.

Toutefois, ce deuxième mode de réalisation induit des charges radiales importantes au niveau de l'alésage d'une des deux branches 28.2 de la chape 28 en raison de l'expansion de la deuxième extrémité du corps tubulaire 42.

On connaît également la demande de brevet FR2118756 qui décrit un assemblage pour une attache moteur. Cet assemblage comprend un dispositif de liaison pivotante qui présente un axe d'articulation reliant une chape et une ferrure. L'agencement décrit dans ce document peut induire une charge radiale dans l'alésage de l'une des branches de la chape.

La présente invention vise à remédier aux inconvénients de l'art antérieur. Le document FR2118756 A5 décrit un dispositif de liaison similaire structurellement et fonctionnellement à l'objet de la revendication 1.

A cet effet, l'invention a pour objet un dispositif de liaison pivotante reliant au moins deux pièces tel que revendiqué dans la revendication 1. Ainsi, le dispositif de liaison pivotante peut être assemblé depuis un seul côté de la chape. Selon un autre avantage, le dispositif de liaison pivotante n'induit aucune charge radiale dans l'alésage de l'une des branches, contrairement au deuxième mode de réalisation de l'art antérieur. Enfin, aucune des autres pièces du dispositif de liaison pivotante n'est soumise à des contraintes à l'état bloqué.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'un ensemble moteur d'aéronef,
- La figure 3 est une vue en perspective d'un dispositif de liaison pivotante qui illustre un premier mode de réalisation de l'art antérieur, à l'état démonté,
- La figure 4 est une vue latérale d'un dispositif de liaison pivotante qui illustre un deuxième mode de réalisation de l'art antérieur,
- La figure 5 est une coupe longitudinale d'une partie du dispositif de liaison pivotante visible sur la figure 4,
- La figure 6 est une vue en perspective d'une partie du dispositif de liaison pivotante visible sur la figure 4, à l'état démonté,
- La figure 7 est une coupe longitudinale d'un dispositif de liaison pivotante qui illustre un mode de réalisation de l'invention,
- La figure 8 est une coupe en perspective d'une partie du dispositif de liaison pivotante visible sur la figure 7,
- La figure 9 est une vue latérale d'une bague de guidage et d'une branche d'une chape du dispositif de liaison pivotante visible sur la figure 7, à l'état démonté,
- La figure 10 est une coupe longitudinale de la bague de guidage et de la branche de la chape visibles sur la figure 9, à l'état monté,
- La figure 11 est une coupe en perspective de la bague de guidage visible sur la figure 9,
- Les figures 12A et 12B sont des coupes d'une partie du dispositif de liaison pivotante visible sur la figure 7 lors de l'insertion d'un axe cylindrique dans la bague de guidage visible sur les figures 9 à 11, et
- Les figures 13A et 13B sont des coupes d'une partie du dispositif de liaison pivotante visible sur la figure 7 lors de la mise en place d'un écrou de blocage.

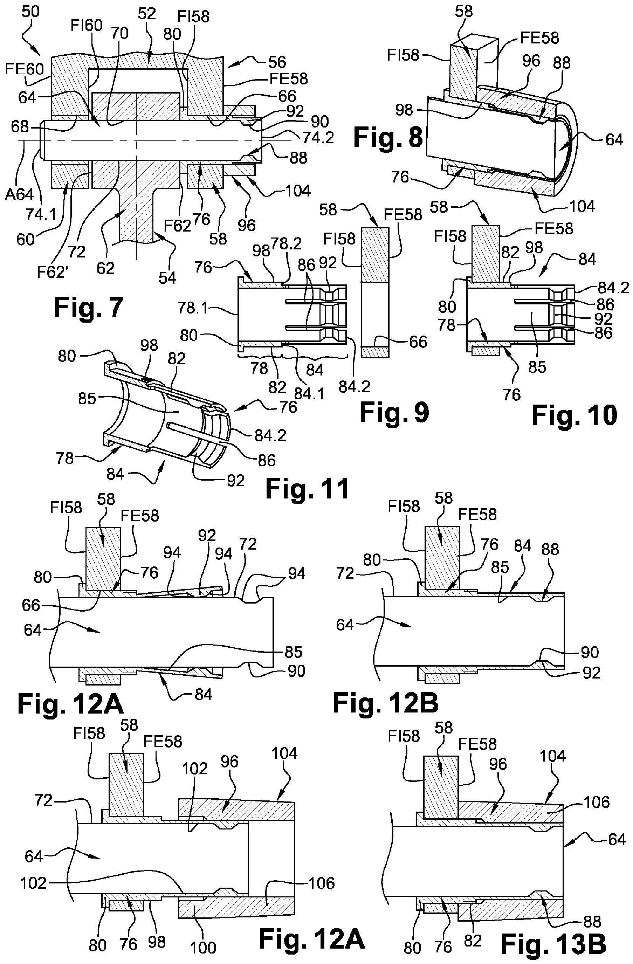

Sur la figure 7, on a représenté un dispositif de liaison pivotante 50 reliant au moins des première et deuxième pièces 52 et 54. Selon une application, la première pièce 52 est un capot d'une nacelle d'aéronef et la deuxième pièce 54 est une nacelle d'aéronef.

Le dispositif de liaison pivotante 50 comprend :
- une chape 56, solidaire de la première pièce 52, présentant des première et deuxième branches 58, 60,
- un bras 62, solidaire du reste de la deuxième pièce 54, positionné entre les première et deuxième branches 58, 60 de la chape 56,
- un axe cylindrique 64, reliant le bras 62 et la chape 56, formant un axe de pivotement A64.

Pour la suite de la description, une direction longitudinale est une direction parallèle à l'axe de pivotement A64. Une direction radiale est perpendiculaire à l'axe de pivotement A64. Un plan longitudinal est un plan qui passe par l'axe de pivotement A64. Un plan transversal est un plan perpendiculaire à l'axe de pivotement A64.

Selon une configuration, chaque branche 58 (ou 60) comprend une face intérieure FI58 (ou FI60), orientée vers l'autre branche 60 (ou 58), et une face extérieure FE58 (ou FE60) opposée à la face intérieure FI58 (ou F60). Les faces intérieures FI58, FI60 et les faces extérieures FE58, FE60 sont parallèles entre elles et positionnées dans des plans transversaux.

Chaque branche 58 (ou 60) comprend un alésage 66 (ou 68) qui débouche au niveau de la face intérieure FI58 (ou FI60) et de la face extérieure FE58 (ou FE60), l'alésage 66 (ou 68) présentant un axe de révolution perpendiculaire à la face intérieure FI58 (ou FI60) et à la face extérieure FE58 (ou FE60).

Le bras 62 comprend deux faces latérales F62, F62' parallèles entre elles et à l'axe de pivotement A64 ainsi qu'un alésage 70 qui débouche au niveau des faces latérales F62, F62', l'alésage 70 présentant un axe de révolution perpendiculaire aux faces latérales F62, F62'.

L'axe cylindrique 64 peut être plein ou creux. Il présente une face périphérique 72 cylindrique coaxiale à l'axe de pivotement A64, qui s'étend entre des première et deuxième faces terminales 74.1, 74.2 sensiblement perpendiculaires à l'axe de pivotement A64.

Le dispositif de liaison pivotante 50 comprend au moins une bague de guidage 76 intercalée entre l'une des branches 58 et l'axe cylindrique 64. La bague de guidage 76 comprend un diamètre intérieur, égal au diamètre extérieur de l'axe cylindrique 64, et un diamètre extérieur égal au diamètre intérieur à l'alésage 66 de la première branche 58.

Selon une configuration, les alésages 66 à 70 des première et deuxième branches 58, 60 et du bras 62 comprennent des bagues de guidage. Selon une configuration, seuls les alésages 66, 68 des première et deuxième branches 58, 60 comprennent des bagues de guidage.

Quelle que soit la configuration, la première branche 58 de la chape 56 comprend une bague de guidage 76, positionnée dans l'alésage 66 de ladite première branche 58, qui comporte :
- un corps tubulaire 78, s'étendant entre des première et deuxième extrémités 78.1, 78.2, qui présente :
   ∘ une collerette 80, au niveau de la première extrémité 78.1, configurée pour prendre appui contre la face intérieure FI58 de la première branche 58, et
   ∘ un tronçon 82, au niveau de la deuxième extrémité 78.2, en saillie par rapport à la face extérieure FE58 de la première branche 58 (lorsque la bague de guidage 76 est positionnée dans l'alésage 66 de la première branche 58 et que la collerette 80 est en appui contre la face intérieure FI58 de la première branche 58),
- un prolongement 84, s'étendant entre des première et deuxième extrémités 84.1, 84.2, en saillie par rapport à la face extérieure FE58 de la première branche 58 (lorsque la bague de guidage 76 est positionnée dans l'alésage 66 de la première branche 58 et que la collerette 80 est en appui contre la face intérieure FI58 de la première branche 58), la première extrémité 84.1 du prolongement 84 étant reliée à la deuxième extrémité 78.2 du corps tubulaire 78, le prolongement 84 présentant au moins une fente 86 permettant au prolongement 84 de s'expanser radialement de manière élastique.

Le corps tubulaire 78 et le prolongement 84 ne forment qu'une unique et même pièce.

Selon un mode de réalisation visible sur les figures 9 à 11, le corps tubulaire 78 et le prolongement 84 présentent des diamètres intérieurs identiques et sensiblement égaux au diamètre extérieur de l'axe cylindrique 64. Ainsi, le prolongement 84 comprend une face intérieure 85 en contact avec la face périphérique de l'axe cylindrique 64 lorsque le prolongement 84 n'est pas expansé radialement.

Le corps tubulaire 78 présente un diamètre extérieur sensiblement égal au diamètre de l'alésage 66 de la première branche 58 et supérieur à celui du prolongement 84. Le prolongement 84 a une faible épaisseur favorisant sa déformation élastique.

La collerette 80 a un diamètre supérieur au diamètre extérieur du corps tubulaire 78. Cette collerette 80 permet de bloquer la bague de guidage 76 par rapport à la première branche 58 selon la direction longitudinale, dans un premier sens.

Selon un mode de réalisation, le prolongement 84 comprend plusieurs fentes 86 réparties régulièrement sur la circonférence du prolongement 84.

Chaque fente 86 est parallèle à l'axe de pivotement A64 et s'étend à partir de la deuxième extrémité 84.2 du prolongement 84 jusqu'à approximativement la première extrémité 84.1 du prolongement 84.

Selon une caractéristique de l'invention, le dispositif de liaison pivotante comprend un système d'immobilisation 88 de l'axe cylindrique 64 et de la bague de guidage 76 l'un par rapport à l'autre, configuré pour occuper un état libre, visible sur la figure 12A, dans lequel l'axe cylindrique 64 et la bague de guidage 76 coulissent l'un par rapport à l'autre selon une direction parallèle à l'axe de pivotement A64, et un état bloqué, visible sur la figure 12B, dans lequel l'axe cylindrique 64 et la bague de guidage 76 sont immobilisés l'un par rapport à l'autre selon la direction longitudinale, dans les deux sens.

Selon une configuration, le système d'immobilisation 88 comprend des formes au niveau de l'axe cylindrique 64 et du prolongement 84 de la bague de guidage 76 qui sont configurées pour coopérer l'une avec l'autre lorsque le système d'immobilisation est à l'état bloqué.

Selon un mode de réalisation, le système d'immobilisation 88 comprend au moins une gorge 90 qui s'étend sur toute la circonférence de la face périphérique 72 de l'axe cylindrique 64, dans un plan transversal.

En complément, le système d'immobilisation 88 comprend au moins une nervure 92, au niveau de la face intérieure 85 du prolongement 84 de la bague de guidage 76, dont les formes sont complémentaires à celles de la gorge 90 de l'axe cylindrique 64.

Selon une configuration, la gorge 90 et la nervure 92 ont des sections trapézoïdales identiques et présentent chacune deux parois latérales 94 évasées (référencées sur la figure 12A) qui favorisent l'introduction ou la sortie de la nervure 92 de la gorge 90.

Le prolongement 84 est configuré pour pouvoir se déformer radialement de manière élastique, grâce notamment aux fentes 86, pour permettre à la nervure 92 de coulisser sur l'axe cylindrique 64 (comme illustré sur la figure 12A) lorsqu'elle n'est pas positionnée au droit de la gorge 90 et de pénétrer dans ladite gorge 90 (comme illustré sur la figure 12B) lorsque la nervure 92 et la gorge 90 sont positionnées au droit l'une de l'autre.

Le dispositif de liaison pivotante 50 comprend un système de blocage 96 configuré pour occuper un état démonté (visible sur la figure 13A), dans lequel il autorise un montage et un coulissement de la bague de guidage 76 dans l'alésage 66 de la première branche 58, et un état bloqué (visible sur la figure 13B) dans lequel il est en contact avec la face extérieure FE58 de la première branche 58 afin de bloquer la bague de guidage 76 par rapport à la première branche 58 selon la direction longitudinale, dans un deuxième sens opposé au premier sens. Ainsi, le système de blocage 96 et la collerette 80 immobilisent la bague de guidage 76 par rapport à la première branche 58 selon la direction longitudinale, dans les deux sens.

Selon un mode de réalisation, le système de blocage 96 comprend un filetage 98, au niveau du tronçon 82 de la bague de guidage 76, en saillie par rapport à la face extérieure FE58 de la première branche 58 et un écrou de blocage 100 présentant un alésage taraudé 102 configuré pour se visser sur le filetage 98. Lorsque l'écrou de blocage 100, vissé sur le filetage 98, est en contact avec la face extérieure FE58 de la première branche 58, le système de blocage est à l'état bloqué. La collerette 80 étant en contact avec la face intérieure FI58 de la première branche et l'écrou de blocage 100 étant en contact avec la face extérieure FE58 de la première branche 58, la bague de guidage 76 est immobilisée en translation par rapport à la première branche 58 selon la direction longitudinale, dans les deux sens.

Selon une autre caractéristique de l'invention, le dispositif de liaison pivotante 50 comprend un système de verrouillage 104 configuré pour empêcher le système d'immobilisation 88 de passer de l'état bloqué à l'état libre en limitant l'expansion radiale du prolongement 84 de la bague de guidage 76.

Selon un mode de réalisation, le système de verrouillage 104 comprend une bague de verrouillage 106 configurée pour s'emmancher sur le prolongement 84 et empêcher la sortie de la nervure 92 de la gorge 90.

Selon un mode de réalisation, cette bague de verrouillage 106 présente un diamètre intérieur supérieur ou égal au diamètre extérieur du prolongement 84 et inférieur au diamètre extérieur du prolongement 84 augmenté de deux fois la hauteur (dimension prise selon la direction radiale) de la nervure 92. Selon une configuration, la bague de verrouillage 106 présente un diamètre intérieur sensiblement égal au diamètre extérieur du prolongement 84 afin qu'il n'y ait aucune déformation radiale à l'état bloqué.

Selon un autre mode de réalisation, la surface interne de la bague de verrouillage 106 présente une forme légèrement tronconique, de manière à exercer une légère pression radiale sur la surface externe du prolongement 84 lorsque la bague de verrouillage 106 est emmanchée ce qui correspond à l'état bloqué. Du fait de sa flexibilité, cette pression génère une légère déformation du prolongement 84 en direction de l'axe cylindrique 64 et par conséquent une pression radiale entre la nervure 92 et la gorge 90, ce qui génère des efforts de friction tangents empêchant la rotation relative de l'axe cylindrique 64 par rapport au prolongement 84.

Selon un mode de réalisation visible sur les figures 7, 8, 13A et 13B, l'écrou de blocage 100 et la bague de verrouillage 106 ne forment qu'une unique et même pièce. Ainsi, le vissage de l'écrou de blocage 100 permet le maintien de la bague de verrouillage 106 emmanchée sur le prolongement 84.

Selon une configuration, le dispositif de liaison pivotante 50 comprend un système antirotatif empêchant l'écrou de blocage 100 de se dévisser.

L'assemblage du dispositif de liaison pivotante est décrit au regard des figures 9, 10, 12A, 12B, 13A et 13B.

Dans un premier temps, la bague de guidage 76 est introduite dans l'alésage 66 de la première branche 58 depuis la face intérieure FI58, comme illustré sur la figure 9. La bague de guidage 76 coulisse dans l'alésage 66 jusqu'à ce que la collerette 80 vienne en contact contre la face intérieure FI58 de la première branche 58, comme illustré sur la figure 10.

En suivant, l'axe cylindrique 64 est introduit, via le prolongement 84, dans la bague de guidage 76. La forme de la nervure 92 favorise l'expansion radiale du prolongement 84 lorsque la face terminale 74.1 de l'axe cylindrique 64 vient en contact avec ladite nervure 92. Le passage de l'axe cylindrique 64 au droit de la nervure 92 provoque l'expansion radiale de manière élastique du prolongement 84, comme illustré sur la figure 12A. L'axe cylindrique 64 est introduit dans la bague de guidage 76 jusqu'à ce que la nervure 92 coopère avec la gorge 90. En raison de son élasticité, le prolongement 84 retrouve sa forme cylindrique, comme illustré sur la figure 12B. Le système d'immobilisation 88 est à l'état bloqué. Ainsi, l'axe cylindrique 64 et la bague de guidage 76 sont immobilisés l'un par rapport à l'autre selon la direction longitudinale.

Dès lors, l'écrou de blocage 100 et la bague de verrouillage 106 sont emmanchés sur le prolongement 84, comme illustré sur la figure 13A. L'écrou de blocage 100 est vissé sur le tronçon 82 fileté de la bague de guidage 76 jusqu'à venir en contact avec la face extérieure FE58 de la première branche 58. La bague de guidage 76 est alors immobilisée par rapport à la première branche 58 selon une direction longitudinale, comme illustré sur la figure 13B. L'axe cylindrique 64 étant immobilisé par rapport à la bague de guidage 76 selon la direction longitudinale, il se retrouve immobilisé par rapport à la première branche 58 selon la direction longitudinale.

La bague de verrouillage 106 étant liée à l'écrou de blocage 100 lorsque ce dernier est vissé, elle se retrouve emmanchée sur le prolongement 84 et empêche toute expansion radiale de ce dernier.

Selon l'invention, le dispositif de liaison pivotante peut être assemblé depuis un seul côté de la chape 56. Ainsi, la face extérieure FE60 de la deuxième branche 60 peut être inaccessible.

Selon un autre avantage, le dispositif de liaison pivotante n'induit aucune charge radiale dans l'alésage de l'une des branches, contrairement au deuxième mode de réalisation de l'art antérieur. Enfin, aucune des autres pièces du dispositif de liaison pivotante n'est soumise à des contraintes à l'état bloqué.

## Revendications

1. Dispositif de liaison pivotante reliant au moins deux pièces (52, 54) et comprenant :
- une chape (56), solidaire de la première pièce (52), présentant des première et deuxième branches (58, 60) comportant chacune une face intérieure (FI5, FI60) orientée vers l'autre branche (60, 58) et une face extérieure (FE58, FE60) opposée à la face intérieure (FI58, F60), un alésage (66, 68) qui débouche au niveau des faces intérieure et extérieure (FI58, FI60, FE58, FE60),
- un bras (62), solidaire de la deuxième pièce (54), positionné entre les première et deuxième branches (58, 60) de la chape (56) et comportant un alésage (70),
- un axe cylindrique (64) configuré pour se loger dans les alésages (66, 68, 70) des première et deuxième branches (58, 60) et du bras (62), formant un axe de pivotement (A64),
- au moins une bague de guidage (76), intercalée entre la première branche (58) et l'axe cylindrique (64), comportant un corps tubulaire (78) qui présente une collerette (80) configurée pour prendre appui contre la face intérieure (FI58) de la première branche (58) afin de bloquer la bague de guidage (76) par rapport à la première branche (58) selon une direction parallèle à l'axe de pivotement (A64), dans un premier sens,
**caractérisé en ce que** la bague de guidage (76) comprend un prolongement (84) en saillie par rapport à la face extérieure (FE58) de la première branche (58), le prolongement (84) présentant au moins une fente (86) permettant au prolongement (84) de s'expanser radialement de manière élastique et **en ce que** le dispositif de liaison pivotante comprend :
- un système d'immobilisation (88) comprenant au moins une gorge (90), qui s'étend dans un plan transversal sur une face périphérique (72) de l'axe cylindrique (64), et au moins une nervure (92) présentant des formes complémentaires à celles de la gorge (90) au niveau d'une face intérieure (85) du prolongement (84) de la bague de guidage (76) en contact avec la face périphérique (72) de l'axe cylindrique (64) lorsque le prolongement (84) n'est pas expansé radialement, ledit système d'immobilisation étant configuré pour occuper un état libre dans lequel l'axe cylindrique (64) et la bague de guidage (76) coulissent l'un par rapport à l'autre, selon une direction parallèle à l'axe de pivotement (A64), et un état bloqué dans lequel l'axe cylindrique (64) et la bague de guidage (76) sont immobilisés l'un par rapport à l'autre selon la direction longitudinale, dans les deux sens, lorsque la nervure (92) et la gorge (90) sont positionnées au droit l'une de l'autre, et
- un système de blocage (96) configuré pour occuper un état démonté dans lequel il autorise un coulissement de la bague de guidage (76) dans l'alésage (66) de la première branche (58) et un état bloqué dans lequel il est en contact avec la face extérieure (FE58) de la première branche (58) afin de bloquer la bague de guidage (76) par rapport à la première branche (58) selon la direction longitudinale, dans un deuxième sens opposé au premier sens.

2. Dispositif de liaison pivotante selon la revendication précédente, **caractérisé en ce que** le dispositif de liaison pivotante (50) comprend un système de verrouillage (104) configuré pour empêcher le système d'immobilisation (88) de passer de l'état bloqué à l'état libre, le système de verrouillage (104) comprenant une bague de verrouillage (106), configurée pour s'emmancher sur le prolongement (84) et empêcher la sortie de la nervure (92) de la gorge (90).

3. Dispositif de liaison pivotante selon la revendication 1 ou 2, **caractérisé en ce que** la gorge (90) et la nervure (92) ont des sections trapézoïdales identiques et présentent chacune deux parois latérales (94) évasées.

4. Dispositif de liaison pivotante selon l'une des revendications précédentes, **caractérisé en ce que** le système de blocage (96) comprend un filetage (98), au niveau d'un tronçon (82) du corps tubulaire de la bague de guidage (76), en saillie par rapport à la face extérieure (FE58) de la première branche (58) et un écrou de blocage (100) présentant un alésage taraudé (102) configuré pour se visser sur le filetage (98), le système de blocage (96) étant à l'état bloqué lorsque l'écrou de blocage (100), vissé sur le filetage (98), est en contact avec la face extérieure (FE58) de la première branche (58).

5. Dispositif de liaison pivotante selon la revendication précédente, **caractérisé en ce que** l'écrou de blocage (100) et la bague de verrouillage (106) ne forment qu'une unique et même pièce.

6. Dispositif de liaison pivotante selon l'une des revendications 2 à 5, **caractérisé en ce que** la bague de verrouillage (106) présente un diamètre intérieur supérieur au diamètre extérieur du prolongement (84) et inférieur au diamètre extérieur du prolongement (84) augmenté de deux fois la hauteur de la nervure (92).

7. Dispositif de liaison pivotante selon l'une des revendications 2 à 6, **caractérisé en ce que** la bague de verrouillage (106) présente une surface interne légèrement tronconique, de manière à exercer une légère pression radiale sur le prolongement (84) lorsque la bague de verrouillage (106) est emmanchée.

8. Aéronef comprenant un capot équipé d'au moins un dispositif de liaison pivotante selon l'une des revendications précédentes.

## Patentansprüche

1. Schwenkverbindungsvorrichtung, die mindestens zwei Bauteile (52, 54) verbindet und enthält:
- einen fest mit dem ersten Bauteil (52) verbundenen Gabelkopf (56), der erste und zweite Schenkel (58, 60) aufweist, die je eine zum anderen Schenkel (60, 58) gerichtete Innenseite (FI5, FI60) und eine der Innenseite (FI58, F60) entgegengesetzte Außenseite (FE58, FE60) und eine Bohrung (66, 68) aufweisen, die im Bereich der Innen- und Außenseiten (FI58, FI60, FE58, FE60) mündet,
- einen fest mit dem zweiten Bauteil (54) verbundenen Arm (62), der zwischen den ersten und zweiten Schenkeln (58, 60) des Gabelkopfs (56) positioniert ist und eine Bohrung (70) aufweist,
- eine zylindrische Achse (64), die konfiguriert ist, in den Bohrungen (66, 68, 70) der ersten und zweiten Schenkel (58, 60) und des Arms (62) aufgenommen zu werden, die eine Schwenkachse (A64) bildet,
- mindestens einen Führungsring (76), der zwischen den ersten Schenkel (58) und die zylindrische Achse (64) eingefügt ist, der einen rohrförmigen Körper (78) aufweist, der einen Kragen (80) aufweist, der konfiguriert ist, gegen die Innenseite (FI58) des ersten Schenkels (58) anzuliegen, um den Führungsring (76) bezüglich des ersten Schenkels (58) gemäß einer Richtung parallel zur Schwenkachse (A64) in einer ersten Richtung zu blockieren,
**dadurch gekennzeichnet, dass** der Führungsring (76) eine bezüglich der Außenseite (FE58) des ersten Schenkels (58) vorstehende Verlängerung (84) enthält, wobei die Verlängerung (84) mindestens einen Schlitz (86) aufweist, der es der Verlängerung (84) ermöglicht, sich radial elastisch auszudehnen, und dass die Schwenkverbindungsvorrichtung enthält:
- ein Feststellsystem (88), das mindestens eine Kehle (90), die sich in einer Querebene auf einer Umfangsseite (72) der zylindrischen Achse (64) erstreckt, und mindestens eine Rippe (92) enthält, die komplementäre Formen zu denjenigen der Kehle (90) im Bereich einer Innenseite (85) der Verlängerung (84) des Führungsrings (76) in Kontakt mit der Umfangsseite (72) der zylindrischen Achse (64) aufweist, wenn die Verlängerung (84) nicht radial ausgedehnt ist, wobei das Feststellsystem konfiguriert ist, einen freien Zustand einzunehmen, in dem die zylindrische Achse (64) und der Führungsring (76) zueinander gemäß einer Richtung parallel zur Schwenkachse (A64) gleiten, und einen blockierten Zustand einzunehmen, in dem die zylindrische Achse (64) und der Führungsring (76) zueinander gemäß der Längsrichtung in beiden Richtungen festgestellt sind, wenn die Rippe (92) und die Kehle (90) einander gegenüber positioniert sind, und
- ein Blockiersystem (96), das konfiguriert ist, einen abmontierten Zustand anzunehmen, in dem es ein Gleiten des Führungsrings (76) in der Bohrung (66) des ersten Schenkels (58) erlaubt, und einen blockierten Zustand anzunehmen, in dem es mit der Außenseite (FE58) des ersten Schenkels (58) in Kontakt ist, um den Führungsring (76) bezüglich des ersten Schenkels (58) gemäß der Längsrichtung in einer der ersten Richtung entgegengesetzten zweiten Richtung zu blockieren.

2. Schwenkverbindungsvorrichtung nach dem vorhergehenden Anspruch, **dadurch gekennzeichnet, dass** die Schwenkverbindungsvorrichtung (50) ein Verriegelungssystem (104) enthält, das konfiguriert ist, das Feststellsystem (88) daran zu hindern, vom blockierten Zustand in den freien Zustand überzugehen, wobei das Verriegelungssystem (104) einen Verriegelungsring (106) enthält, der konfiguriert ist, sich auf die Verlängerung (84) aufzuschieben und den Austritt der Rippe (92) aus der Kehle (90) zu verhindern.

3. Schwenkverbindungsvorrichtung nach Anspruch 1 oder 2, **dadurch gekennzeichnet, dass** die Kehle (90) und die Rippe (92) gleich Trapezquerschnitte haben und je zwei ausgeweitete Seitenwände (94) aufweisen.

4. Schwenkverbindungsvorrichtung nach einem der vorhergehenden Ansprüche, **dadurch gekennzeichnet, dass** das Blockiersystem (96) ein Gewinde (98) im Bereich eines Abschnitts (82) des rohrförmigen Körpers des Führungsrings (76), das bezüglich der Außenseite (FE58) des ersten Schenkels (58) vorsteht, und eine Blockiermutter (100) enthält, die eine Gewindebohrung (102) aufweist, die konfiguriert ist, auf das Gewinde (98) geschraubt zu werden, wobei das Blockiersystem (96) im blockierten Zustand ist, wenn die auf das Gewinde (98) geschraubte Blockiermutter (100) mit der Außenseite (FE58) des ersten Schenkels (58) in Kontakt ist.

5. Schwenkverbindungsvorrichtung nach dem vorhergehenden Anspruch, **dadurch gekennzeichnet, dass** die Blockiermutter (100) und der Verriegelungsring (106) nur ein einziges Bauteil bilden.

6. Schwenkverbindungsvorrichtung nach einem der Ansprüche 2 bis 5, **dadurch gekennzeichnet, dass** der Verriegelungsring (106) einen Innendurchmesser aufweist, der größer als der Außendurchmesser der Verlängerung (84) und kleiner als der Außendurchmesser der Verlängerung (84) erhöht um die zweifache Höhe der Rippe (92) ist.

7. Schwenkverbindungsvorrichtung nach einem der Ansprüche 2 bis 6, **dadurch gekennzeichnet, dass** der Verriegelungsring (106) eine leicht kegelstumpfförmige Innenfläche aufweist, um einen leichten radialen Druck auf die Verlängerung (84) auszuüben, wenn der Verriegelungsring (106) aufgeschoben ist.

8. Luftfahrzeug, das eine mit mindestens einer Schwenkverbindungsvorrichtung nach einem der vorhergehenden Ansprüche ausgestattete Haube enthält.

## Claims

1. Pivoting link device linking at least two parts (52, 54) and comprising:
- a yoke joint (56), secured to the first part (52), having first and second branches (58, 60) each comprising an internal face (FI5, FI60) oriented towards the other branch (60, 58) and an external face (FE58, FE60) opposite the internal face (FI58, F60), a bore (66, 68) which emerges at the internal and external faces (FI58, FI60, FE58, FE60),
- an arm (62), secured to the second part (54), positioned between the first and second branches (58, 60) of the yoke joint (56) and comprising a bore (70),
- a cylindrical axis (64) configured to be housed in the bores (66, 68, 70) of the first and second branches (58, 60) and of the arm (62), forming a pivoting axis (A64),
- at least one guiding ring (76), inserted between the first branch (58) and the cylindrical axis (64), comprising a tubular body (78) which has a flange (80) configured to bear against the internal face (FI58) of the first branch (58) in order to block the guiding ring (76) relative to the first branch (58) along a line parallel to the pivoting axis (A64), in a first direction,
**characterized in that** the guiding ring (76) comprises an extension (84) protruding relative to the external face (FE58) of the first branch (58), the extension (84) having at least one slit (86) allowing the extension (84) to be expanded radially elastically, and **in that** the pivoting link device comprises:
- an immobilization system (88) comprising at least one groove (90), which extends in a plane transversal to a peripheral face (72) of the cylindrical axis (64), and at least one rib (92) having forms complementing those of the groove (90) on an internal face (85) of the extension (84) of the guiding ring (76) in contact with the peripheral face (72) of the cylindrical axis (64) when the extension (84) is not expanded radially, said immobilization system being configured to occupy a free state in which the cylindrical axis (64) and the guiding ring (76) slide relative to one another, along a line parallel to the pivoting axis (A64), and a blocked state in which the cylindrical axis (64) and the guiding ring (76) are immobilized relative to one another along the longitudinal line, in both directions, when the rib (92) and the groove (90) are positioned in line with one another, and
- a blocking system (96) configured to occupy a separated state in which it allows the guiding ring (76) to slide in the bore (66) of the first branch (58) and a blocked state in which it is in contact with the external face (FE58) of the first branch (58) in order to block the guiding ring (76) relative to the first branch (58) along the longitudinal line, in a second direction opposite the first direction.

2. Pivoting link device according to the preceding claim, **characterized in that** the pivoting link device (50) comprises a locking system (104) configured to prevent the immobilization system (88) from switching from the blocked state to the free state, the locking system (104) comprising a locking ring (106), configured to be fitted onto the extension (84) and prevent the rib (92) from leaving the groove (90).

3. Pivoting link device according to Claim 1 or 2, **characterized in that** the groove (90) and the rib (92) have identical trapezoidal sections and each have two flared lateral walls (94).

4. Pivoting link device according to one of the preceding claims, **characterized in that** the blocking system (96) comprises a threading (98), on a section (82) of the tubular body of the guiding ring (76), protruding relative to the external face (FE58) of the first branch (58) and a blocking nut (100) having a tapped bore (102) configured to be screwed onto the threading (98), the blocking system (96) being in the blocked state when the locking nut (100), screwed onto the threading (98), is in contact with the external face (FE58) of the first branch (58).

5. Pivoting link device according to the preceding claim, **characterized in that** the locking nut (100) and the locking ring (106) form only one and the same part.

6. Pivoting link device according to one of Claims 2 to 5, **characterized in that** the locking ring (106) has an internal diameter greater than the external diameter of the extension (84) and less than the external diameter of the extension (84) augmented by twice the height of the rib (92).

7. Pivoting link device according to one of Claims 2 to 6, **characterized in that** the locking ring (106) has a slightly tapered internal surface, so as to exert a slight radial pressure on the extension (84) when the locking ring (106) is fitted.

8. Aircraft comprising a cowl equipped with at least one pivoting link device according to one of the preceding claims.
